# EUROPEAN PATENT APPLICATION

(11) **EP 4 776 087 A1**
(43) Date of publication of application: **15.07.2026**
(21) Application number: 25151332.1
(22) Date of filing: 10.01.2025
(51) Int. Cl.: G05B 19/418, B65G 37/00, B65G 49/00, B65G 49/05

(54) **METHOD OF PLANNING A CONVEYOR ARRANGEMENT**

(71) Applicant: Interroll Holding AG, 6592 Sant'Antonino (CH)
(72) Inventor: The designation of the inventor has not yet been filed
(74) Representative: Kohlhof, Stephan

(57) **Abstract**

Method of planning a conveyor arrangement (1),
the conveyor arrangement is adapted to convey an object (9) from at least one first location (F) to at least one second location (D);
the method comprising the step of providing an IT planning tool (8) for usage by a user; wherein by using the IT planning tool (8), representations (83) of a plurality of conveyor components, in particular conveyor zones, are arranged in a manner to form a representation of said conveyor arrangement (1);
wherein the IT planning tool (8) is adapted
- to receive a user input (UI), wherein the user input defines at least one object parameter (85) of an object (9) to be conveyed by the planned conveyor arrangement (1), and
- that the IT planning tool (8) is adapted to determine conveyor parameters (86) of the conveyor arrangement (1) be planned based on the defined object parameter (85).

## Description

The invention refers to a method of planning conveyor arrangement.

EP 3 222 564 B1 discloses a conveyor for conveying an object from a start position to a target place. The conveyor comprises a plurality of zones into which the conveyor is divided, the object being conveyed across the zones; each of the zones comprising: a linear conveyor zone that linearly conveys the object; a conveying direction changing zone selecting a conveying direction of the object to send out the object in the selected conveying direction; a conveyance destination storage unit that is configured to store the conveyance destination information temporarily; an information receiving unit that is configured to receive the conveyance destination information from an upstream zone; and an information transmitting unit that is configured to transmit the conveyance destination information to a downstream zone. The conveyor transfers the conveyance destination information from the upstream zone to the downstream zone with the movement of the object across the zones.

WO 2021/048042 A1, also published as EP 3 792 206 A1, discloses a virtual layouter tool. Here, a conveyor arrangement can be created in the virtual world using 3D data of individual conveyor modules. The 3D data of the conveyor devices are arranged in a spatial relation to each other which conforms to a possible relation of the related real module devices in the real world. The created conveyor arrangement in the virtual world can be used in a simulation mode for predicting an efficient use and configuring a sufficient capacity of the conveyor arrangement.

In the virtual layouter tool presented in WO 2021/048042 A1 / EP 3 792 206 A1 a tool machine is surrounded by a fence, which has the purpose, to keep people away from the machine. Separate from the fence, a plurality of human working spaces are visible, where a human is in immediate contact with the objects conveyed with the conveyor arrangement. Any human interactions related to the conveyed objects, e.g. loading or unloading of objects on the conveyor happen outside of the zone guarded by the fence. The fence does not provide any safety in relation to the interaction of humans with objects located on the conveyor.

WO 2018/191122 A1 refers to the field of transfer guards providing a smooth transition to support objects traveling across a gap between two conveyor surfaces, such as two pulleys of separate belts, and to prevent objects from falling into the gap. Any topics related to user interaction during normal operation are not part of the disclosure.

US 2022/009722 A1 discloses a roller having a drive unit, which is arranged with a roller body and adapted to generate a torque between an axle element and the roller body. A sensor function unit is arranged within the roller body and which is designed to detect a conveyed material for conveying by means of the motor-operated conveying roller. A control unit is connected to the sensor function unit, wherein the control unit is and is designed to receive a sensor signal from the sensor function unit and to transmit a control signal to the drive unit n a manner dependent on the sensor signal, wherein the control signal comprises data for the drive of the motor operated conveying roller with a characteristic profile which is predetermined by the control signal, in a conveying operating mode.

It is an object of the invention to improve safety for humans handling objects located on the conveyor in a human working space. The invention comprises a method and a conveyor arrangement according to the main claims; embodiments are subject of the subclaims and the description.

The conveyor arrangement to be planned with the help of the inventive method is adapted to convey an object from at least one first location to at least one second location. A first location may be a feed-in station; a second location may be a destination. A user may interact with the object to be conveyed.

In an embodiment, a method of planning a conveyor arrangement is described. The conveyor arrangement is adapted to convey an object from at least one first location to at least one second location. The method includes providing an IT planning tool for usage by a user. By using the IT planning tool, representations of a plurality of conveyor components, particularly conveyor zones, are arranged to form a representation of the conveyor arrangement. The IT planning tool is adapted to receive a user input, where the user input defines at least one object parameter of an object to be conveyed by the planned conveyor arrangement. The IT planning tool determines at least one conveyor parameter of the conveyor arrangement to be planned based on the defined object parameter.

This method allows for precise and efficient planning of conveyor systems tailored to specific object parameters, enhancing efficiency and customization.

In an embodiment, the method includes that the object parameter is a geometrical parameter of the object. Considering geometrical parameters in an automated way ensures that the conveyor system can handle objects of various shapes and sizes effectively.

In an embodiment, the method includes that the object parameter is the weight of the object. Accounting for the weight of objects in an automated way supports in designing a conveyor system that can handle different loads, ensuring durability and performance.

In an embodiment, the method includes that the object parameter describes the physical rigidity of the object. Understanding the rigidity of objects allows for the design of a conveyor system that can handle both rigid and flexible items without damage in an automated way.

In an embodiment, the method includes that the conveyor parameter is a geometrical parameter of the conveyor arrangement. This ensures that the physical layout of the conveyor system is optimized for the objects it will transport in an automated way, improving efficiency and space utilization.

In an embodiment, the method includes that the conveyor parameter is a drive power parameter. Adjusting the drive power based on object parameters ensures in an automated way that the conveyor system operates efficiently, reducing energy consumption and wear on components.

In an embodiment, the method includes that the conveyor parameter defines whether the conveying surface of the conveyor is formed by a plurality of conveyor rollers or by a conveyor belt. This flexibility allows for the selection of the most suitable conveying surface for different types of objects in an automated way, enhancing the system's adaptability.

In an embodiment, if the surface of the conveyor is formed by a plurality of conveyor rollers, the conveyor parameter describes the distance between two neighbouring conveyor rollers. Specifying the distance between rollers ensures in an automated way that objects are conveyed smoothly and securely, preventing jams and ensuring consistent operation.

An example embodiment of the invention is described in more detail with the help of the figures; herein show
- fig. 1: a conventional conveyor zone in perspective view;
- fig. 2: a conventional basic conveyor arrangement;
- fig. 3: schematic representations of different conveyor zones;
- fig. 4: principal sketch of a conveyor arrangement;
- fig. 5: a personal computer on which the IT planning tool is running in an initial planning step;
- fig. 6 -12: the personal computer of fig. 5 during subsequent planning steps.

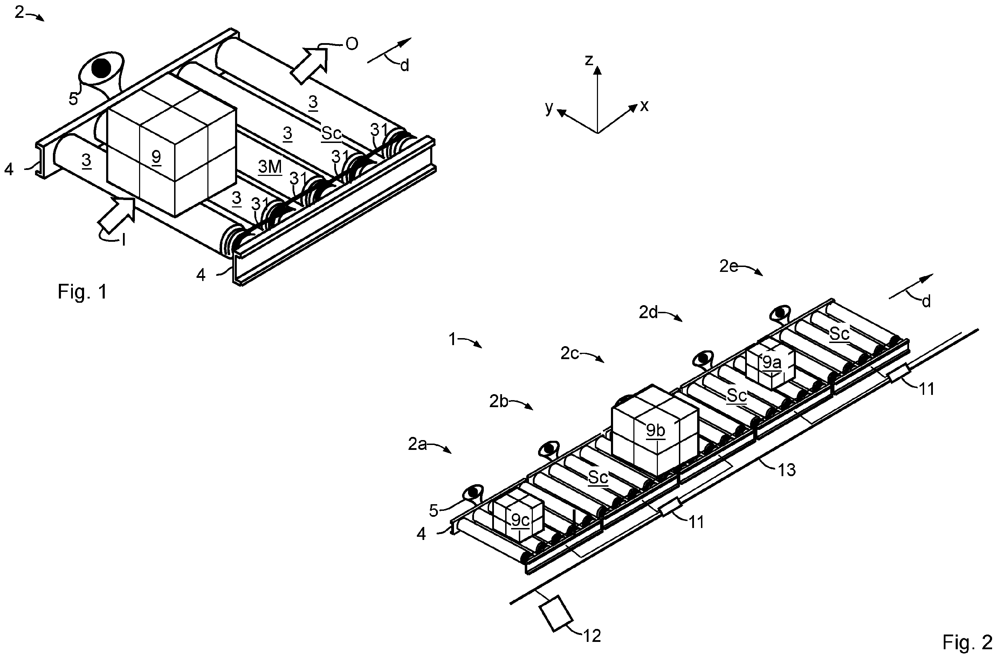

Figure 1 shows an exemplary conveyor zone 2, comprising several conveyor rollers 3 mounted on a common support frame 4. The conveyor rollers 3s are driven together by a common motor. For this purpose, one of the conveyor rollers 3 is designed as a motorized conveyor roller 3M. The motorized conveyor roller 3M is driven in particular by a three-phase motor arranged within the conveyor roller. Via one or more drive connectors 31, e.g., a drive belt, the conveyor rollers 3 of a conveyor zone 2 are drive-connected to each other and are jointly driven by the motorized conveyor roller 3M. An upper side of the rollers forms a conveyor surface Sc, on which an object 9 is in particular linearly conveyed from an inlet I to an outlet O along a conveying direction d.

In another embodiment a conveyor belt is used instead of rollers; accordingly the conveyor surface Sc is formed by an upper side of the conveyor belt (not shown in figures 1 and 2).

By means of a presence sensor 5, the presence of a conveyed object 9 arranged on the conveyor zone 2 can be determined as soon as the object comes into the field of view of the sensor 5.

The motorized conveyor rollers 3M are each controlled by at least one or a plurality of zone controllers 11 (figure 2). A local zone controller 11 can control the motorized conveyor rollers 3M of several conveyor zones 2. A plurality of zone controllers 11 are arranged in a conveyor arrangement 1, which communicate with each other via a bus connection 13.

Figure 2 shows a basic conveyor arrangement 1, where conveyor zones 2a..e as described previously are used. A plurality of zone controllers 11 control the operation of the conveyor zones 2. A PLC 12 (programmable logic controller) may be provided to control the overall operation of the conveyor arrangement 1.

Scanners (not shown) may be arranged along the zones and provide identification data relating to objects 9a..c passing the scanner in the zones. These identification data are sent via bus connection 13 to the PLC 12. The PLC 12 has access to an object data base (not shown), which provides destination data based in the identification of the objects 9. Based on the acquired data the PLC 12 provides operation instructions to a local zone controller 11 on how to handle the object 9, i.e., to which of the outlets O said object 9 is to be conveyed.

In an alternative embodiment as described in the WO 2023/247237 A1, no PLC or similar is required. Instead of a PLC the zone controllers are connected to a common higher-level object data broker, in particular via the bus connection, with which the zone controllers are also connected to one another. The data broker provides destination data related to the identified objects and the zone controllers are adapted to control operation of the zones based on the provided destination data.

In particular the zone controllers 11 control the motorized conveyor rollers 3M in such a way that the successively approaching conveyed objects 9 do not collide with each other, which is usually called "zero pressure accumulation". The control takes place in such a way that essentially only one conveyed object 9 is present per conveyor zone 2. However, slight overlaps may occur. For example, an upstream object 9b located on an upstream conveyor zone 2c may already enter a downstream conveyor zone 2d even though the downstream object 9a has not yet left this downstream conveyor zone 2d completely. Among other things, the sensor signals of the presence sensors 5 serve as input variables here, although it is ensured that the two conveyed objects 9 do not touch and thus do not damage each other.

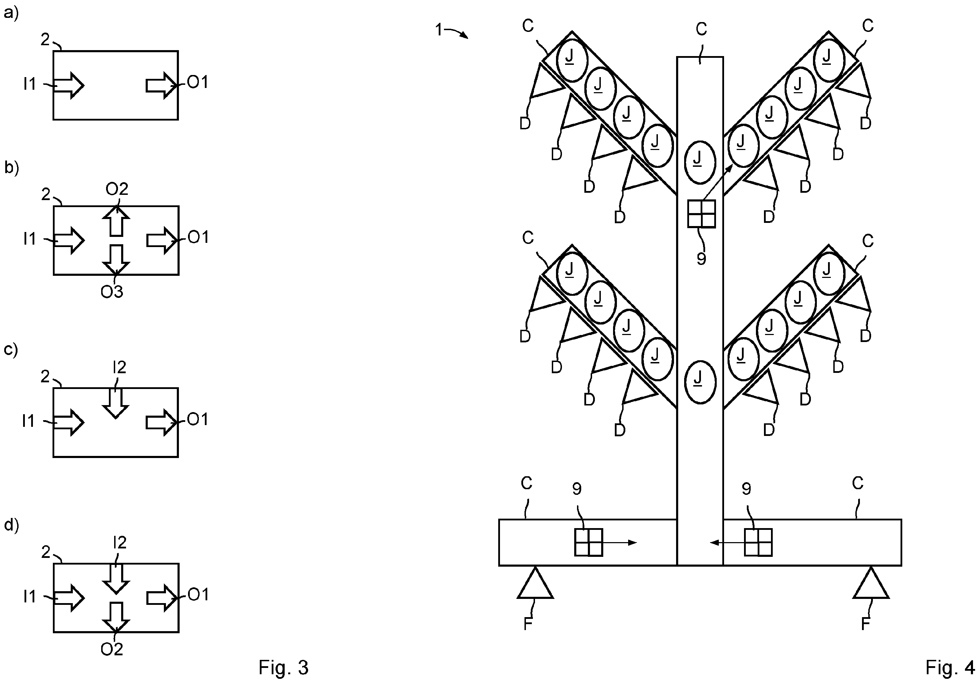

In the following course of the invention, reference is made to conveyor zones 2, using a schematic representation of said conveyor zone 2 as shown in figure 3. Here, figure 3a represents schematically a conveyor zone 2 of figure 1, which has one first inlet I1 and one first outlet O1. No more inlets and outlets are provided. The conveyor zone 2 can also be curved or from other shape.

Figure 3b shows the representation of another conveyor zone 2 having an extended scope of operation. Here in addition to the conveyor zone 2 of figure 3a the conveyor zone 2 has an additional, second outlet 02. The object 9 can be conveyed selectively from said first inlet I1 to one of said first and second outlets O1, O2. Optionally, the conveyor zone 2 has an additional, third outlet O3. In this option, the object 9 can be conveyed selectively from said first inlet I1 to one of said first, second and third outlets O1, O2, O3.

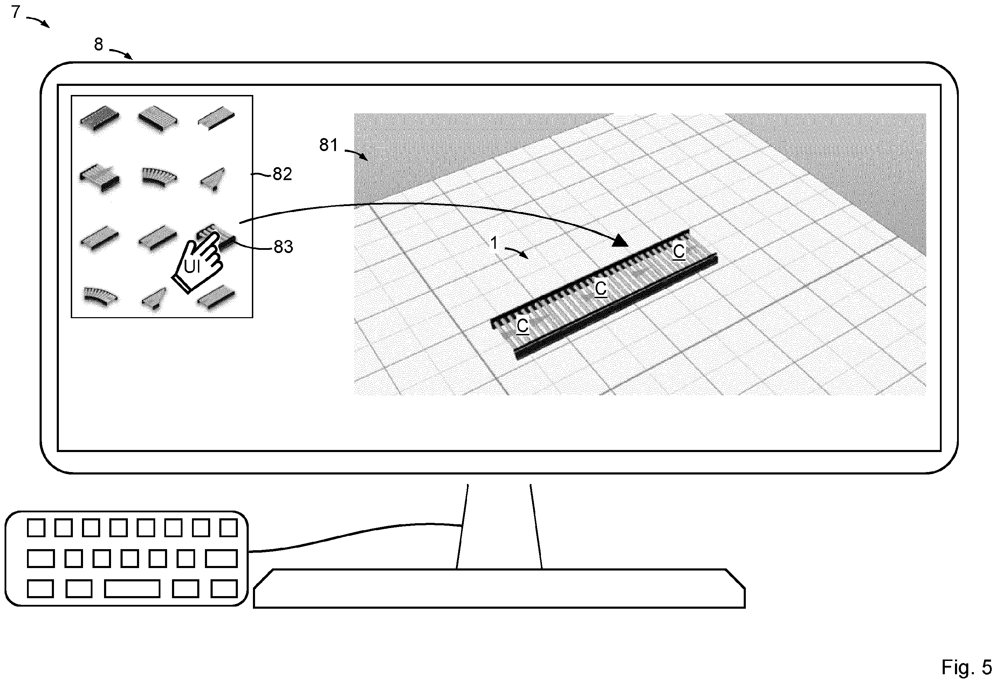

As an example, said conveyor zone 2 of figure 3b can be formed by a conveyor zone 2 as shown in figure 1, which additionally is provided with a transfer device as described with reference to figure 5 of EP 3 222 564 B1 (in this document and figure the transfer device has reference sign 20).

Figure 3c shows the representation of a conveyor zone 2 having an extended scope of operation. In addition to the conveyor zone 2 of figure 3a, the conveyor zone 2 has an additional second inlet I2. Objects 9 can be conveyed from one of said first and second inlets I1, I2 to said first outlet O1.

The transfer device as described with reference to figure 3b may also be suitable to provide said additional second inlet I2.

Figure 3d shows the representation of a conveyor zone 2 having an extended scope of operation. Here in addition to the conveyor zone 2 of figure 1 the conveyor zone 2 has an additional second inlet I2 and an additional second outlet O2 and is an example as a combination of the embodiments of figures 3b and 3c.

All conveyor zones 2 are controlled by a zone controller 11 as shown in figure 1 or 2, in particular wherein one zone controller 11 may be adapted to control the operation of more than one zone 2.

Starting from figure 4 the planning of a conveyor arrangement 1 is performed by a person, herein called the planner.

Figure 4 shows a principal sketch of what the conveyor arrangement 1 should finally look like.

The conveyor arrangement 1 according to the sketch has two feed-in stations F, where a user can input objects 9 to be conveyed. From the feed-in stations F the objects 9 are conveyed to several destinations D by several conveyors C. A plurality of junctions J are provided, at which the objects 9 are selectively transferred onto one of a plurality of routes along the conveyors C. Such a sketch may only be available in the head of a planner.

Reference is now made to figure 5. For detailed planning the planner uses an IT tool 8, which is an application program running on a personal computer 7, where the term personal computer also includes tablet PC or similar devices. The IT planning tool 8 is herein also called the "layouter".

The layouter 8 provides a construction area 81 where the planner can create a digital representation of a conveyor arrangement 1. The layouter 8 provides a selection area 82 where components are provided for being selected by the planner. Through user interaction UI the user can select a graphical representation 83 of a certain component and transfer the selected component via drag & drop into the construction area 81.

After a few repetitions a small conveyor arrangement 1 has been created already in the construction area 81, comprising a straight line of roller conveyors C.

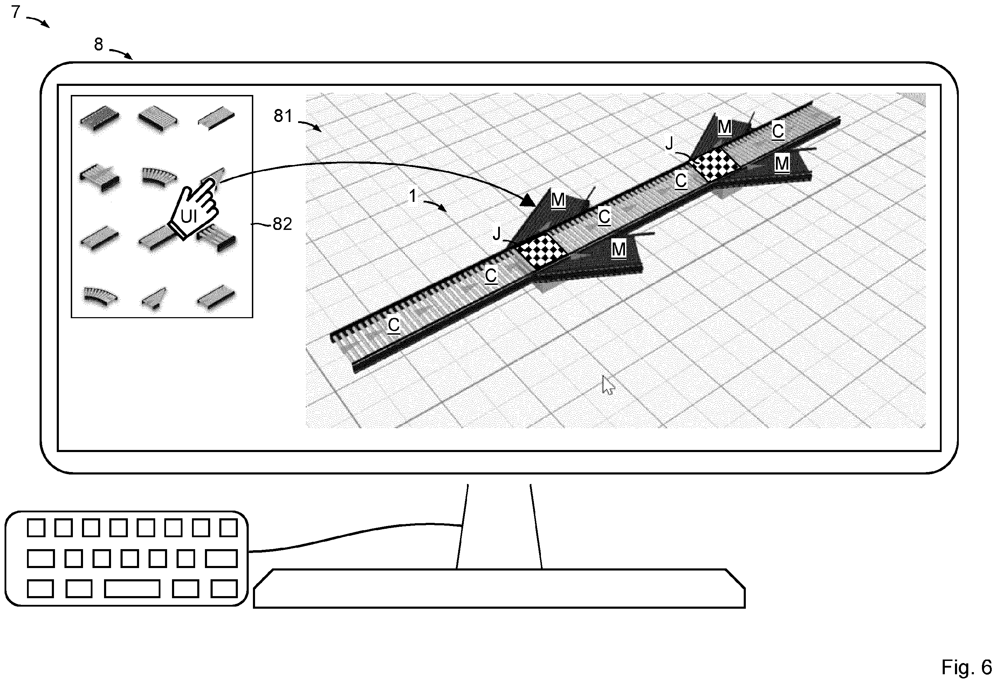

Figure 6 shows in the construction area 81 the representation of the further developed conveyor arrangement 1. In addition to the situation in figure 5, the conveyor arrangement 1 now comprises the junctions J as well as a number of merges M branching off at the junctions J.

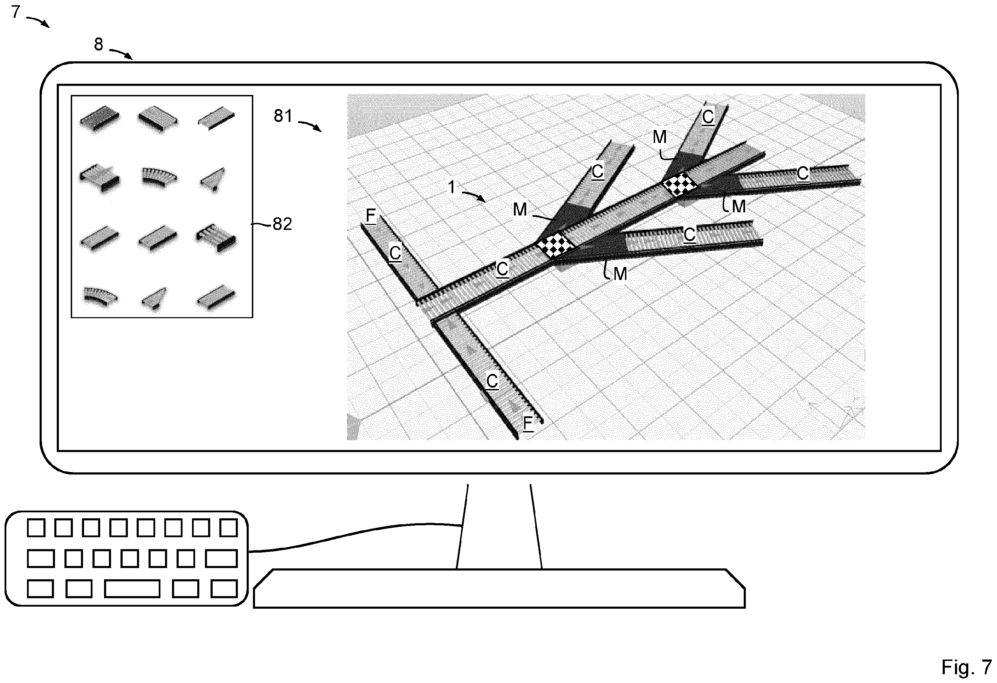

Figure 7 shows in the construction area 81 the representation of the further developed conveyor arrangement 1. In addition to the situation in figure 6, the conveyor arrangement 1 comprises now additional conveyors C downstream of the merges M. Also the feed-in stations F and the connecting conveyors C are provided, which are connected via a junction J to the previous conveyors C.

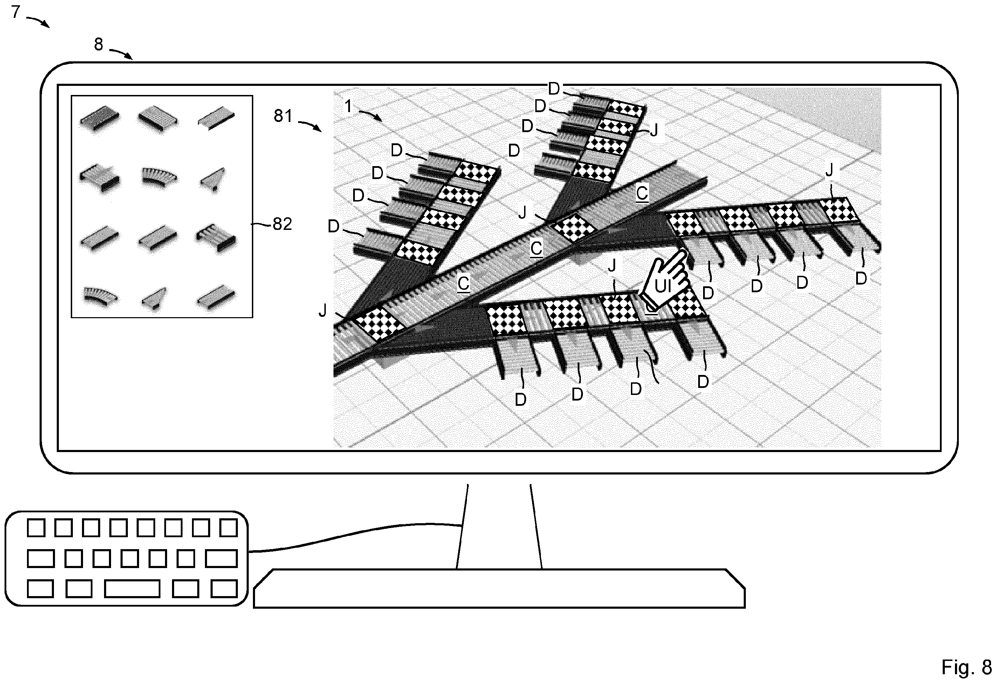

Figure 8 shows in the construction area 81 the representation of the further developed conveyor arrangement 1. In addition to the situation in figure 7, the conveyor arrangement 1 comprises the destinations D branching off from the conveyors C downstream of the merges M. Additional junctions J are provided where the destinations D branch off from previous conveyors C. Here, the destination D are in the form of a roller conveyor.

As can be realized by a comparison between the figure 8 and 7 the focus of the construction area can be varied by the planner.

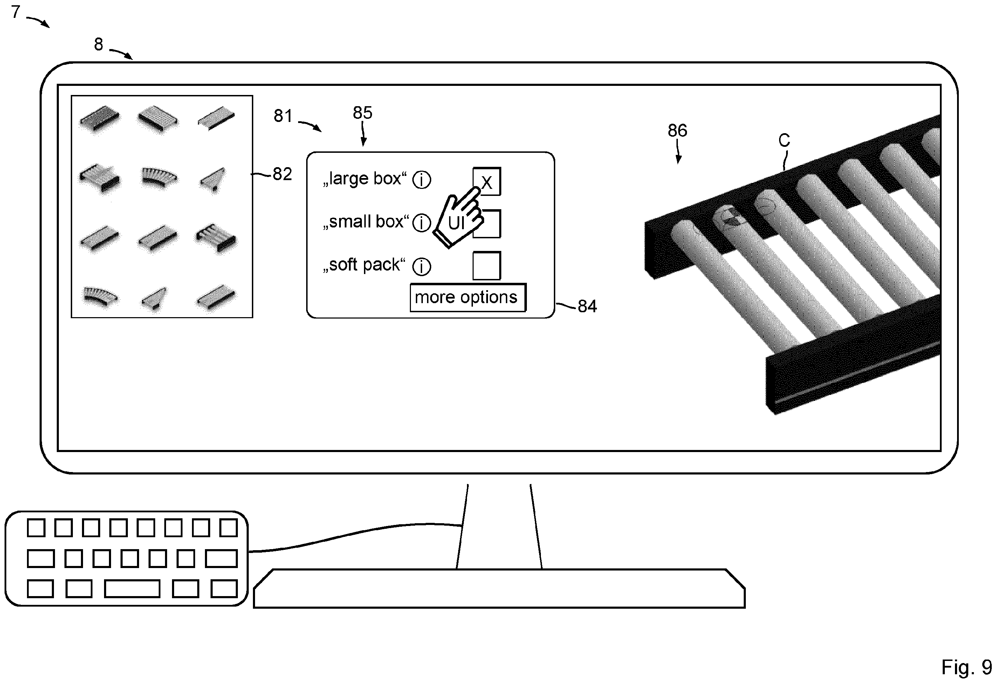

Figures 9 to 12 show within the construction area 81 a representation of a conveyor C. In addition, an object definition box 84 is provided, where a user can perform a user interaction UI. As an example the user can define parameters 85 of the objects to be conveyed with the conveyor arrangement to be planned.

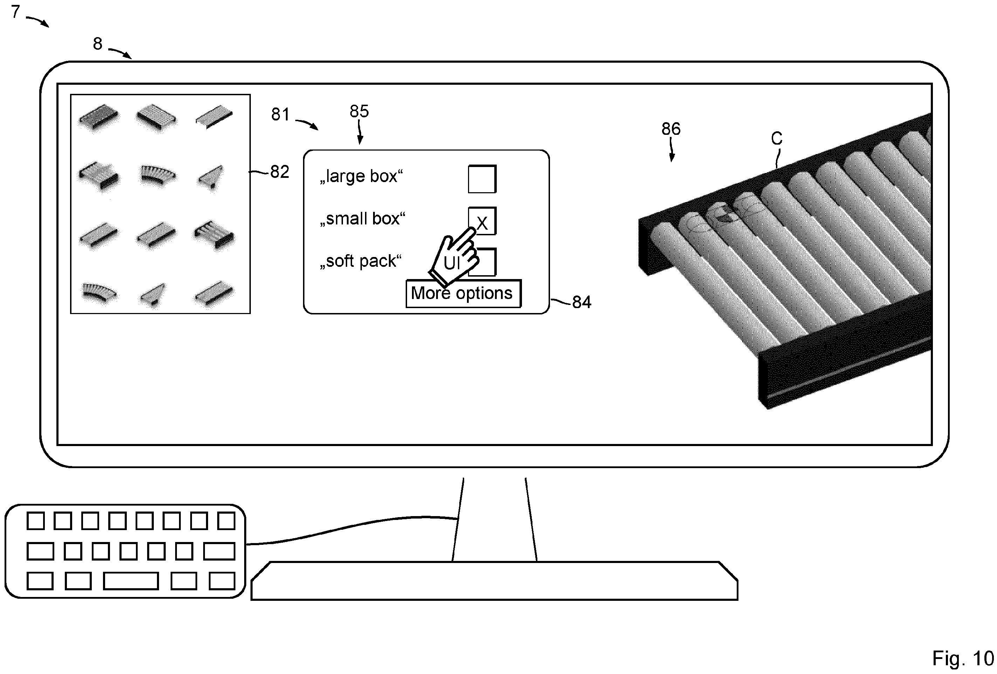

As an example, in figure 9, the user defines that only large boxes are to be conveyed by the conveyor. In another example, in figure 10, the user defines that only small boxes are to be conveyed by the conveyor.

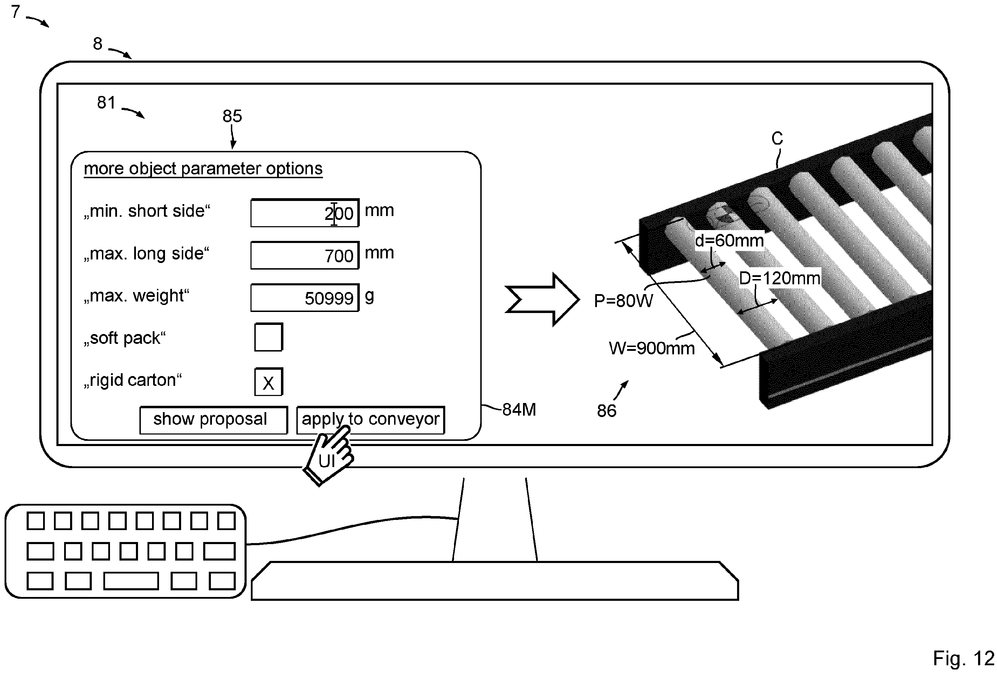

Based on the definition of object parameters in figure 9 and 10, the IT tool 8 already implements a design to the planned conveyor having certain conveyor parameters 86. In case of figure 9 the rollers are located at a larger distance, than in figure 9, since smaller objects require the rollers to be arranged at a smaller distance from each other. Here, the distance between the roller is considered as a conveyor parameter (see reference sign 86 in figure 12), which is determined by the IT tool 8 based on the object parameter defined by the user input.

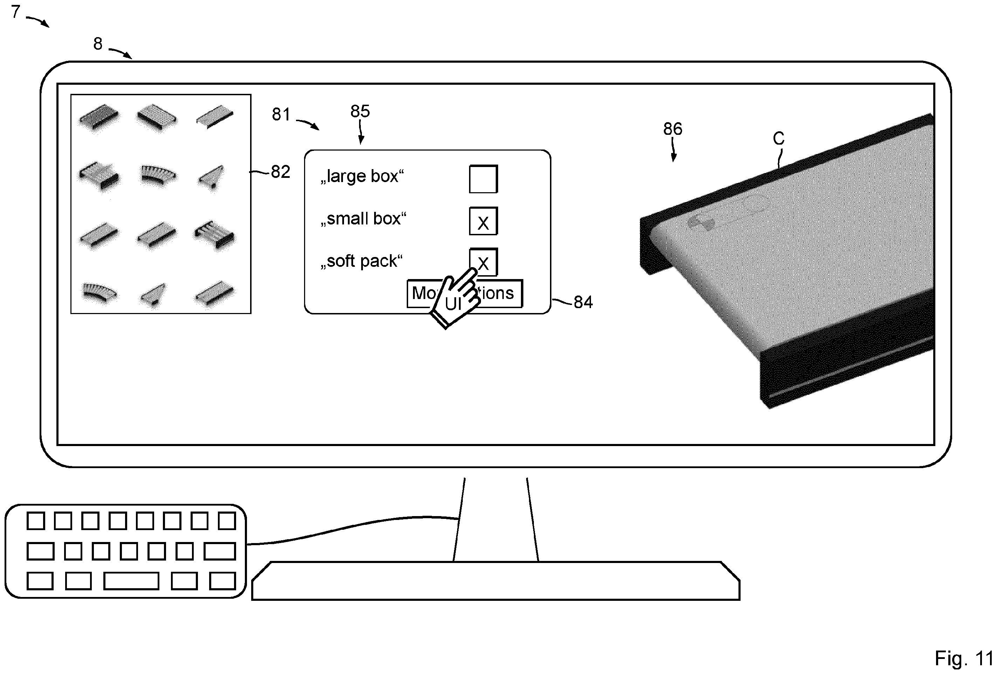

As another example, in figure 11, the user defines, that, in addition softpacks are to be conveyed by the conveyor. The IT tool 8 already implements a design to the planned conveyor, where the conveyor is a belt conveyor instead of a roller conveyor. Here, the determined conveyor type "belt conveyor" instead of "roller conveyor" is considered as conveyor parameter 86 determined by the IT tool 81 based on the object parameters 85 defined by the user input.

In the object definition box 84 of figures 9 to 11, the object parameters 85 available for selection are quite rough. In case that the user intends to provide more detailed input, the user can press the button "more options", where an object definition box 84M with more object parameter options appears (figure 12), Here the user has the opportunity to define the object parameters in a more detailed way. Besides the above geometrical object parameter, the weight may be a relevant object parameter, since heavy objects require more motor power than lighter objects. There are different possibilities in which manner the IT tool 81 communicates the design proposal to the user. In the figures, this communication comprises output elements, alternatively a textual output of design proposals is possible as well.

The user can decide whether the IT tool should merely provide a proposal of the determined conveyor parameter (see left button in figure 12) or apply the determined conveyor parameters directly to the planned conveyor (see right button in figure 12).

The following list shows exemplary conveyor parameters 86 to which the object parameter has a significant influence; in brackets, the object parameters are shown, which may influence the conveyor parameter:
- type of conveyor, e.g. roller conveyor, belt conveyor (object material, object rigidity);
- conveyor width (object size);
- power of drive motor (object weight);
- distance between rollers (object size);
- diameter of rollers (object size).

### List of reference signs

- 1: conveyor arrangement
- 2: conveyor zone
- 3: conveyor roller
- 3M: motor-driven conveyor roller
- 4: support frame
- 5: presence sensor
- 7: PC, personal computer
- 8: IT tool / layouter
- 9: object to be conveyed
- 11: local zone controller
- 12: PLC
- 13: bus connection

- 81: construction area
- 82: selection area
- 83: graphical representation of a component
- 84: object definition box
- 85: object parameter
- 86: conveyor parameter

- C: conveyor as an example of a conveyor area
- d: conveying direction
- D: destination as an example of a conveyor area
- F: feed-in station as an example of a conveyor area
- I: inlet
- J: junction
- M: merge
- O: outlet
- UI: user interaction
- D: distance between rollers
- W: conveyor width

## Claims

1. Method of planning a conveyor arrangement (1),
the conveyor arrangement is adapted to convey an object (9) from at least one first location (F) to at least one second location (D);
the method comprising the step of providing an IT planning tool (8) for usage by a user; wherein by using the IT planning tool (8), representations (83) of a plurality of conveyor components, in particular conveyor zones, are arranged in a manner to form a representation of said conveyor arrangement (1);
**characterized in**
**that** the IT planning tool (8) is adapted
- to receive a user input (UI), wherein the user input defines at least one object parameter (85) of an object (9) to be conveyed by the planned conveyor arrangement (1), and
- to determine at least one conveyor parameter (86) of the conveyor arrangement (1) to be planned based on the defined object parameter (85).

2. Method according to the preceding claim,
**characterized in**
**that** the object parameter (85) is a geometrical parameter of said object (9).

3. Method according to any of the preceding claims,
**characterized in**
**that** the object parameter (85) is a weight.

4. Method according to any of the preceding claims,
**characterized in**
**that** the object parameter describes a physical rigidity of the object.

5. Method according to any of the preceding claims,
**characterized in**
**that** the conveyor parameter (86) is a geometrical parameter of said conveyor arrangement (1).

6. Method according to any of the preceding claims,
**characterized in**
**that** the conveyor parameter (86) is a drive power parameter (P).

7. Method according to any of the preceding claims,
**characterized in**
**that** the conveyor parameter (86) defines, whether a conveying surface of the conveyor is formed by a plurality of conveyor rollers or by a conveyor belt.

8. Method according to the preceding claim,
**characterized in**
**that** in case that the surface of the conveyor is formed by a plurality of conveyor rollers, the conveyor parameter (86) describes a distance (D) between two neighboring conveyor rollers.
